# EUROPÄISCHE PATENTANMELDUNG

(11) **EP 0 889 318 A1**
(43) Veröffentlichungstag der Anmeldung: **07.01.1999**
(21) Anmeldenummer: 97110906.1
(22) Anmeldetag: 02.07.1997
(51) Int. Cl.: G01N 15/02

(54) **Verfahren und Vorrichtung zum Prüfen der Grössenverteilung von Partikeln in Aerosolen**

(71) Anmelder: Palas GmbH Partikel-und Lasermesstechnik, 76229 Karlsruhe (DE)
(72) Erfinder: Mölter, Leander, 76744 Wörth (DE); Munzinger, Friedrich, 75053 Gondelsheim (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Zur Erhöhung des Dynamikbereichs beim Prüfen der Größenverteilung von Partikeln in Aerosolen schlägt die Erfindung verfahrensmäßig vor, daß Partikel in zwei im Meßkanal aufeinanderfolgenden Meßvolumen erfaßt werden, wobei insbesondere durch das eine Meßvolumen die Gesamtzahl der durch den Meßkanal strömenden Partikel hindurchtritt, während durch das andere Meßvolumen nur ein geringer Teil der Partikel hindurchtritt. Eine hierzu geeignete Vorrichtung sieht vor, daß ein erstes Meßvolumen (MV1) unmittelbar hinter einer Einlaßdüse (4) für das Aerosol angeordnet ist und eine Fläche senkrecht zur Stromrichtung des Aerosols aufweist, die der Fläche der Mündung der Einlaßdüse entspricht, und daS mit Abstand zum ersten Meßvolumen stromab desselben ein zweites Meßvolumen vorgesehen ist, dessen Querschnitt senkrecht zur Stromrichtung des Aerosols kleiner als der Querschnitt des Meßkanals ist.

## Beschreibung

Die Erfindung betrifft ein Verfahren zum Prüfen der Größenverteilung von Partikeln in Aerosolen, indem sich durch ein Meßvolumen bewegende Partikel erfaßt werden, und eine Vorrichtung zum Prüfen der Größenverteilung von Partikeln in Aerosolen mit einem das zu untersuchende Aerosol führenden Meßkanal.

Bisher war es lediglich möglich, durch eine Vorrichtung zum Prüfen der Größenverteilung von Partikeln in Aerosolen Partikel mit Partikelkonzentrationen in einem engen Konzentrationsschwankungsbereich zu untersuchen. Demgemäß war es praktisch nicht möglich, Aerosole, bei denen die Konzentrationen über die Zeit hin in großem Maße schwanken, in sämtlichen auftretenden Konzentrationsbereichen genau und exakt zu untersuchen.

Der Erfindung liegt daher die Aufgabe zugrunde, ein Verfahren und eine Vorrichtung zum Prüfen der Größenverteilung von Partikeln in Aerosolen zu schaffen, die einen größeren Dynamikbereich hinsichtlich der Partikelkonzentrationen erlauben.

Erfindungsgemäß wird die genannte Aufgabe bei einem Verfahren der eingangs genannten Art dadurch gelöst, daß Partikel in zwei im Meßkanal aufeinanderfolgenden Meßvolumen erfaßt werden, wobei insbesondere durch das eine Meßvolumen die Gesamtzahl der durch den Meßkanal strömenden Partikel hindurchtritt, während durch das andere Meßvolumen nur ein geringer Teil der Partikel hindurchtritt. Eine erfindungsgemäße Vorrichtung sieht zur Lösung der Aufgabe vor, daß ein erstes Meßvolumen unmittelbar hinter einer Einlaßdüse für das Aerosol angeordnet ist und eine Fläche senkrecht zur Stromrichtung des Aerosols aufweist, die der Fläche der Mündung der Einlaßdüse entspricht, und daß mit Abstand zum ersten Meßvolumen stromab desselben ein zweites Meßvolumen vorgesehen ist, dessen Querschnitt senkrecht zur Stromrichtung des Aerosols kleiner als der Querschnitt des Meßkanals ist.

Durch die erfindungsgemäßen Maßnahmen wird es möglich, den Dynamikbereich hinsichtlich der Konzentration der Partikel in einem Aerosol wesentlich zu erhöhen, nämlich bis auf einen Bereich von praktisch 0 Partikeln/cm³ bis zu 10⁵ oder auch 10⁶ Partikeln/cm³, indem in jedem der Meßvolumen nur ein Teilbereich der Konzentrationen erfaßt wird, nämlich im ersten Meßvolumen lediglich ein Partikelbereich bis zu ca. 5 x 10² Partikel/cm³, während höhere Konzentrationen im zweiten Meßvolumen gemessen werden. Durch Änderung der Meßvolumenquerschnitte sind andere Konzentrationsbereiche zu erreichen.

Bevorzugte Ausgestaltungen des Verfahrens zeichnen sich dadurch aus, daß die Meßvolumen durch die Fokusbereiche der Meßstrahlen in einem das zu untersuchende Aerosol führenden Meßkanal gebildet werden und insbesondere dadurch, daß die Querschnitte der Meßstrahlen in den Fokusbereichen wesentlich voneinander abweichen. Entsprechend ist die Vorrichtung in Weiterbildung gekennzeichnet durch eine Meßoptik, mittels derer der Meßkanal durch Meßstrahlen durchstrahlt wird, so daß durch die Fokusbereiche der Meßstrahlen im Meßkanal Meßvolumen gebildet sind. Weiterhin kann vorgesehen sein, daß die Querschnitte der Meßstrahlen in den Fokusbereichen wesentlich voneinander abweichen.

In bevorzugter Ausgestaltung ist vorgesehen, daß die Querschnitte der Meßstrahlen sich um mindestens eine Zehnerpotenz voneinander unterscheiden, wobei insbesondere der Querschnitt des ersten Meßstrahls im Fokusbereich größer als 10⁻¹ mm² ist, während der Querschnitt des zweiten Meßstrahls im Fokusbereich in einer Größenordnung von 10⁻² mm² liegt.

Eine äußerst bevorzugte Ausgestaltung sieht vor, daß durch das eine Meßvolumen die Gesamtzahl der durch den Meßkanal strömenden Partikel hindurchtritt, während durch das andere Meßvolumen nur ein geringer Teil der Partikel hindurchtritt.

In äußerst bevorzugter Weiterbildung ist vorgesehen, daß dem zu untersuchenden Aerosol Verdünnungsgas zugeführt wird, wobei insbesondere das Verdünnungsgas durch eine Ringdüse dem Meßkanal zugeführt wird, die eine das zu untersuchende Aerosol dem Meßkanal zuführende Einlaßdüse umgibt. Weitere Ausgestaltungen sehen vor, daß das Verdünnungsgas dem Meßkanal im Bereich des ersten Meßvolumens zugeführt wird und/oder daß das Verdünnungsgas dem Meßkanal im Bereich des größeren Meßvolumens zugeführt wird.

Während bisher das zu untersuchende Aerosol durch den Meßkanal gesaugt wurde, sieht eine bevorzugte Ausgestaltung vor, daß das zu untersuchende Aerosol mittels des Verdünnungsgases durch den Meßkanal gefördert wird.

Die erfindungsgemäße Vorrichtung zeichnet sich in bevorzugten Ausgestaltungen durch einen in den Meßkanal einmündenden Verdünnungskanal und durch eine gemeinsame Strahlungsquelle für beide Meßstrahlen und einen der Strahlungsquelle nachgeordneten Strahlungsteiler aus.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine erfindungsgemäße Vorrichtung im Längsschnitt;
- Fig. 2: eine vergrößerte Darstellung des Zuführbereichs für die Verdünnungsluft mit ersten Meßvolumen; und
- Fig. 3: einen Querschnitt durch die Fig. 1 entsprechend III-III.

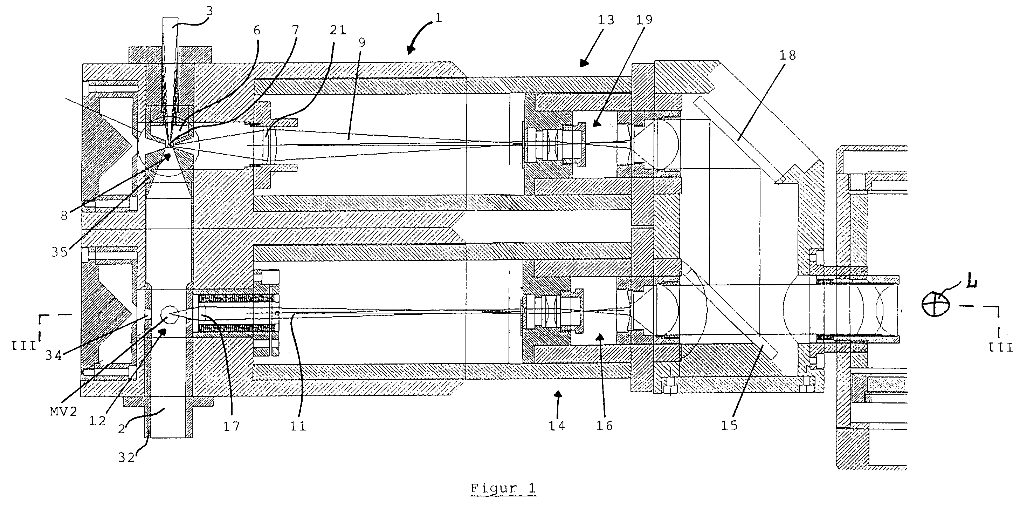

Die erfindungsgemäße Vorrichtung 1 weist einen Meßkanal 2 auf. In den Anfang des Meßkanals mündet ein Zuführkanal für das Aerosol mit einer Einlaßdüse 4. Die Einlaßdüse 4 ist von einem Ringkanal 6 für Verdünnungsgas umgeben, welches über eine den Auslaßbereich der Einlaßdüse 4 umgebende Ringdüse in den Meßkanal 2 eintritt. Unmittelbar hinter Einlaßdüse 4 und Ringdüse 7 befindet sich ein erster Fokusbereich 8 eines ersten Meßstrahls 9, wodurch ein erstes Meßvolumen MV1 gebildet wird. Mit Abstand zu dem ersten Meßvolumen MV1 stromab tritt in den Meßkanal 2 ein zweiter Meßstrahl 11 ein, dessen Fokusbereich 12 im Meßkanal ein zweites Meßvolumen MV2 bildet. Die Meßstrahlen 9, 11 werden durch die in der Fig. 1 dargestellten Beleuchtungsoptiken 13, 14 erzeugt. Die Beleuchtungsoptiken 13, 14 weisen eine gemeinsame Strahlungsquelle L auf. Die Strahlungsquelle L ist vorzugsweise eine Quelle weißen Lichtes, wie eine Xenon-Hochdrucklampe.

Der Strahlungsquelle L ist ein teildurchlässiger Spiegel 15 nachgeordnet, dem sich eine erste Abbildungsoptik 16 anschließt, durch die beide ein erster Teil des von der Strahlungsquelle L erzeugten, den Meßstrahl 11 bildenden Lichts hindurchtritt. Die Abbildungsoptik 16 weist Linsen und Blenden auf. Vor dem Meßkanal 2 ist im Weg des Meßstrahls 11 eine Fokussierlinse 17 angeordnet, die den Meßstrahl 11 mit einem Fokusbereich in der Mitte des Meßkanals 2 fokussiert.

Der Querschnitt des Meßstrahls 11 im Fokusbereich 12 liegt bei 10⁻² mm².

Der durch den halbdurchlässigen Spiegel 15 reflektierte Strahl des Lichtteils der Strahlungsquelle L trifft auf einen parallel zum halbdurchlässigen Spiegel 15 ausgerichteten voll reflektierenden Spiegel 18, so daß der von diesem reflektierte Strahl parallel zum Meßstrahl 11 verläuft. Es schließt sich wieder eine Abbildungsoptik 19 mit Linsenblenden an, durch die der Meßstrahl 9 erzeugt wird. Dieser wird durch eine Linse 21 in seinen Fokusbereich 8 unmittelbar vor der Einlaßdüse 7 fokussiert. Der Fokusbereich 8 weist einen Querschnitt von etwa 1 mm² auf und ist damit eine Größenordnung größer als der Fokusbereich 12.

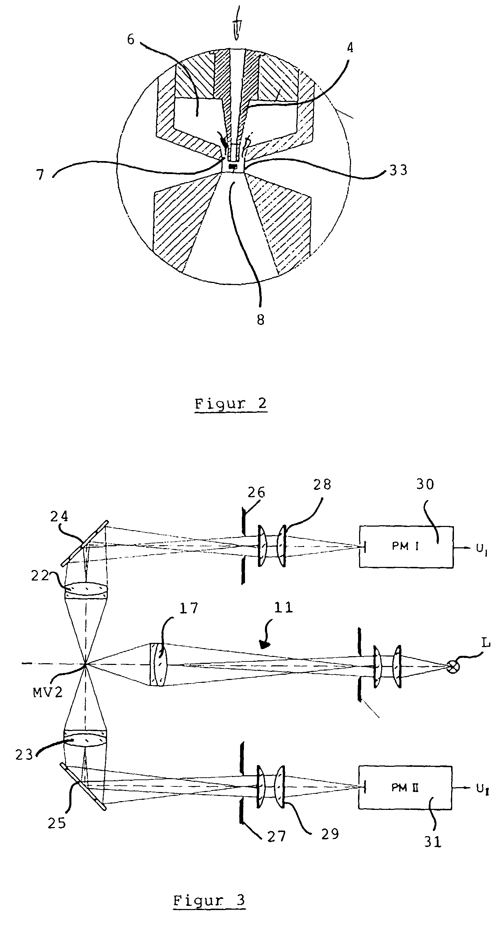

Von den Teilchen des zu untersuchenden Aerosols senkrecht zur Richtung der Meßstrahlen 9, 11 reflektiertes Licht wird durch Detektionsoptiken detektiert, wie sie für den Meßstrahl 11 und das Meßvolumen MV2 in der Fig. 3 dargestellt sind. Es sind beidseits des Meßvolumens Linsen 22, 23, Spiegel 24, 25, diesen folgend Blenden 26, 27 sowie Linsensysteme 28, 29 vor Detektoren 30, 31 in Form von Photomultipliern vorgesehen. Die Beleuchtungs- und Detektionsoptiken bilden gemeinsam Meßoptiken für die Meßvolumen MV1 und MV2.

Im Bereich der Meßvolumen MV1 und MV2 weist das den Kanal 2 bildende Rohr transparente Fenster 33, 34 auf. Im Bereich der Mündung der Einlaßdüse 4 und der Ringdüse 7 ist der Meßkanal 2 auf einen Durchmesser verengt, der dem Durchmesser der Ringdüse 7 entspricht, und erweitert sich von dort aus kontinuierlich über einen konischen Erweiterungsbereich 35.

Das durch den Einlaßkanal 3 und die Einlaßdüse 4 in den Meßkanal 2 eintretende Aerosol wird durch das unter Druck in den Ringraum 6 und die Ringdüse 7 geförderte Verdünnungsgas durch den Meßkanal 2 mitgesogen, so daß das Verdünnungsgas als Fördermittel dient. Im unmittelbar an die Mündung der Einlaßdüse 4 anschließenden, durch den Fokusbereich 8 gebildeten Meßvolumen MV1 liegt das zu untersuchende Aerosol noch unverdünnt vor. Die Mischung des Aerosols mit dem Verdünnungsgas und damit die Verdünnung des zu untersuchenden Aerosols erfolgt erst in dem anschließenden, sich konisch erweiternden Bereich, so daß im Meßvolumen MV2 dann ein verdünntes Aerosol vorliegt. Im Meßvolumen MV1 können damit geringe Konzentrationen von weniger als 1, insbesondere 0,1 Partikeln/cm³ bis in die Größenordnung von 10², insbesondere 3 x 10² Partikeln/cm³ bestimmt werden. Jeder aus der Mündung der Einlaßdüse 4 austretende Partikel durchquert das Meßvolumen MV1, so daß Konzentrationen bis zu den genannten 3 x 10² Partikeln/cm³ gemessen werden können. Solch geringe Konzentrationen würden im Meßvolumen MV2, in dem nur ein Bruchteil des dort durch den Meßkanal 2 hindurchströmenden gesamten Aerosolstroms erfaßt und analysiert wird, zu großer statistischer Unsicherheit führen.

Über 3 x 10² Partikel/cm³ wird die Konzentration im Bereich des Meßvolumens zu groß, die von einzelnen Partikeln gestreute Strahlung überlappt sich, so daß die Teilchen nicht mehr einzeln durch den Detektor erfaßt werden können. Der Detektor ist bei höheren Konzentrationen in Koinzidenz und kann deshalb keine Partikel mehr zählen. Es ist allerdings möglich, bei in höheren Konzentrationen vorliegenden monodispersen Partikeln die dem Meßvolumen MV1 zugeordneten (im einzelnen nicht dargestellten) Empfänger in den Photometermodus (DC) zu schalten und dann sogar noch bei mehr als 10⁶ Partikeln/cm³ die Konzentration zu bestimmen.

Aerosole mit Konzentrationen von mehr als 5 x 10² bis zu 10⁶ Partikeln/cm³ werden durch die durch die Ringdüse 7 in den Meßkanal 2 eintretende Verdünnungsluft im Anschluß an das Meßvolumen MV1, insbesondere im sich konisch erweiternden Bereich 35, verdünnt, beispielsweise um einen Faktor 10 und damit bis auf eine Maximalkonzentration von 10⁵ Partikeln/cm³. Diese höheren Konzentrationen werden dann im Meßvolumen MV2 gemessen.

Insgesamt wird durch die Erfindung die Erweiterung der Meßdynamik durch eine Meßeinrichtung auf einen Meßbereich von weniger als 1 Partikel/cm³ bis zu 10⁶ Partikeln/cm³ erreicht, was insbesondere wesentlich ist, wenn in einem zu messenden Gasstrom sich die Konzentrationen über die Zeit hin ändern oder wenn die Abscheideeffizienz z.B. eines Filters bestimmt werden soll. Vor dem Filter ist die Konzentration im Rohgas meist sehr hoch, z.B. bis 10⁶ Teilchen/cm³ in Reingas, also nach dem Filter sinkt die Konzentration z.B. auf 1 Teilchen/cm³.

## Patentansprüche

1. Verfahren zum Prüfen der Größenverteilung von Partikeln in Aerosolen, indem sich durch ein Meßvolumen bewegende Partikel erfaßt werden, dadurch gekennzeichnet, daß Partikel in zwei im Meßkanal aufeinanderfolgenden Meßvolumen erfaßt werden.

2. Verfahren nach Anspruch 1, dadurch gekennzeichnet, daß die Meßvolumen durch die Fokusbereiche der Meßstrahlen in einem das zu untersuchende Aerosol führenden Meßka8al gebildet werden.

3. Verfahren nach Anspruch 2, dadurch gekennzeichnet, daß die Querschnitte der Meßstrahlen in den Fokusbereichen wesentlich voneinander abweichen.

4. Verfahren nach Anspruch 2 oder 3, dadurch gekennzeichnet, daß die Querschnitte der Meßstrahlen im Fokusbereich sich um mindestens eine Zehnerpotenz voneinander unterscheiden.

5. Verfahren nach einem der Ansprüche 2 bis 4, dadurch gekennzeichnet, daß der Querschnitt des ersten Meßstrahls im Fokusbereich an die Aerosoleinlaßdüse angepaßt ist, z.B. größer als 10⁻¹ mm² ist, während der Querschnitt des zweiten Meßstrahls im Fokusbereich in einer Größenordnung von 10⁻² mm² liegt.

6. Verfahren nach einem der Ansprüche 1 bis 5, dadurch gekennzeichnet, daß durch das eine Meßvolumen die Gesamtzahl der durch den Meßkanal strömenden Partikel hindurchtritt, während durch das andere Meßvolumen nur ein geringer Teil der Partikel hindurchtritt.

7. Verfahren nach einem der vorangehenden Ansprüche, dadurch gekennzeichnet, daß dem zu untersuchenden Aerosol Verdünnungsgas zugeführt wird, um Konzentrationen größer 10⁵ Partikel/cm³ messen zu können.

8. Verfahren nach Anspruch 7, dadurch gekennzeichnet, daß das Verdünnungsgas durch eine Ringdüse dem Meßkanal zugeführt wird, die eine das zu untersuchende Aerosol dem Meßkanal zuführende Einlaßdüse umgibt.

9. Verfahren nach Anspruch 7 oder 8, dadurch gekennzeichnet, daß das Verdünnungsgas dem Meßkanal im Bereich des ersten Meßvolumens zugeführt wird.

10. Verfahren nach einem der Ansprüche 7 bis 9, dadurch gekennzeichnet, daß das Verdünnungsgas dem Meßkanal im Bereich des größeren Meßvolumens zugeführt wird.

11. Verfahren nach einem der Ansprüche 7 bis 10, dadurch gekennzeichnet, daß das zu untersuchende Aerosol mittels des Verdünnungsgases durch den Meßkanal gefördert wird.

12. Vorrichtung zum Prüfen der Größenverteilung von Partikeln in Aerosolen mit einem das zu untersuchende Aerosol führenden Meßkanal, dadurch gekennzeichnet, daß ein erstes Meßvolumen (MV1) unmittelbar hinter einer Einlaßdüse (4) für das Aerosol angeordnet ist und eine Fläche senkrecht zur Stromrichtung des Aerosols aufweist, die der Fläche der Mündung der Einlaßdüse entspricht, und daß mit Abstand zum ersten Meßvolumen stromab desselben ein zweites Meßvolumen vorgesehen ist, dessen Querschnitt senkrecht zur Stromrichtung des Aerosols kleiner als der Querschnitt des Meßkanals ist.

13. Vorrichtung nach Anspruch 12, gekennzeichnet durch eine Meßoptik, mittels derer der Meßkanal durch Meßstrahlen durchstrahlt wird, so daß durch die Fokusbereiche der Meßstrahlen im Meßkanal Meßvolumen gebildet sind.

14. Vorrichtung nach Anspruch 13, dadurch gekennzeichnet, daß die Querschnitte der Meßstrahlen in den Fokusbereichen wesentlich voneinander abweichen.

15. Vorrichtung nach Anspruch 13 oder 14, dadurch gekennzeichnet, daß die Querschnitte der Meßstrahlen in den Fokusbereichen sich um mindestens eine Zehnerpotenz voneinander unterscheiden.

16. Vorrichtung nach einem der Ansprüche 13 bis 15, dadurch gekennzeichnet, daß der Querschnitt des ersten Meßstrahls im Fokusbereich größer als 10⁻¹ mm² ist, während der Querschnitt des zweiten Meßstrahls im Fokusbereich in einer Größenordnung von 10⁻² mm² liegt.

17. Vorrichtung nach einem der Ansprüche 12 bis 16, dadurch gekennzeichnet, daß durch das eine Meßvolumen die Gesamtzahl der durch den Meßkanal strömenden Partikel hindurchtritt, während durch das andere Meßvolumen nur ein geringer Teil der Partikel hindurchtritt.

18. Vorrichtung nach einem der Ansprüche 12 bis 17, gekennzeichnet durch einen in den Meßkanal (2) einmündenden Verdünnungskanal (6).

19. Vorrichtung nach Anspruch 18, dadurch gekennzeichnet, daß der Verdünnungskanal über eine Ringdüse in den Meßkanal mündet, wobei die Ringdüse eine das zu untersuchende Aerosol dem Meßkanal zuführende Einlaßdüse (4) umgibt.

20. Vorrichtung nach Anspruch 18 oder 19, dadurch gekennzeichnet, daß die Einlaßbereiche von Ringdüse (7) und Einlaßdüse (4) unmittelbar vor dem ersten Meßvolumen (MV1) angeordnet sind.

21. Vorrichtung nach einem der Ansprüche 18 bis 20, dadurch gekennzeichnet, daß die Einlaßbereiche von Einlaßdüse (4) und Ringdüse (7) unmittelbar vor dem größeren Meßvolumen (MV1) angeordnet sind.

22. Vorrichtung nach einem der Ansprüche 12 bis 21, gekennzeichnet durch eine gemeinsame Strahlungsquelle (L) für beide Meßstrahlen (9, 11) und einen der Strahlungsquelle (L) nachgeordneten Strahlungsteiler (14).
